# EUROPEAN PATENT SPECIFICATION

(11) **EP 2 047 126 B1**
(45) Date of publication and mention of the grant of the patent: **04.08.2010**
(21) Application number: 07789442.6
(22) Date of filing: 25.06.2007
(51) Int. Cl.: F16B 19/10

(54) **FASTENER FOR BLIND MOUNTING**
HALTERUNG FÜR MARKISENNMONTAGE
DISPOSITIF D'ATTACHE POUR LE MONTAGE DE STORES

(30) Priority: 31.07.2006 FR 0653210
(43) Date of publication of application: 15.04.2009
(73) Proprietor: I.T.W. de France, 95250 Beauchamp (FR)
(72) Inventor: CHRZASTEK, Bogdan, F-77600 Bussy Saint Georges (FR); BERTIN, Frédéric, F-95150 Taverny (FR); HUET, Laurent, F-60110 Meru (FR); COURTIN, Christian, F-95490 Vaureal (FR)
(74) Representative: Lepelletier-Beaufond, François
(86) International application number: PCT/IB2007/001730
(87) International publication number: WO 2008/015511

(56) References cited:
- FR-A1- 2 193 749
- US-A- 3 188 905
- US-A1- 2006 032 031

## Description

The invention generally concerns fasteners for blind mounting on a panel provided with an opening.

It is known that there are such fasteners provided with holding legs for them to be clamped to a panel.

Such a fastener is known in particular from the document FR 2 776 345 which comprises a body of plastics material, having an axial hollow. The body comprises a collar for bearing on the periphery of the opening of a panel and a foot for holding the body on the panel adapted to pass into said opening. The foot comprises several legs, in particular holding legs, which, when not acted upon, are disposed in the form of a barrel. The fastener also comprises a finger adapted to be inserted into the hollow to lock the fastener to the panel. The insertion of the finger causes the separation of the free ends of the holding legs such that the fastener is clamped onto the panel which is held between the bearing collar and the free end of the legs of the holding legs.

The clamping force is localized on the periphery of the opening of the panel and is exerted by the pressing of the holding legs against that periphery.

The document FR2193749 is considered to be the most relevant state of the art and discloses a fastener according with the preamble of claim 1.

The invention is directed to improving the performance of this type of fastener.

To that end, the invention provides a fastener for blind mounting on a panel provided with an opening, comprising a body, of plastics material, having an axial hollow and comprising a collar for bearing on the periphery of said opening and a foot for holding said body on said panel adapted to pass into said opening, said fastener further comprising a finger adapted to be inserted into said hollow and to adopt a locking position in which said fastener is fixed to said panel, **characterized in that** said foot comprises two legs each comprising a flap and a brace member, each said flap being adapted to pivot around a hinge which connects it to the remainder of said foot, each said brace member of a respective said leg extending to a free end, each leg being able to adopt a retracted position in which its flap faces the flap of the other said leg and its brace member is oriented towards its hinge and towards the other said leg, its brace member being superposed with respect to the brace member of the other said leg between said flaps, and an extended position in which its flap has pivoted outwardly with respect to said retracted position, said legs passing from said retracted position to said extended position on insertion of said finger into said body, said free end of each brace member abutting said finger when it is inserted into said hollow in said locking position, by virtue of which each said leg is held in the extended position.

On pushing in of the finger into the hollow of the body, by pressing the finger on the end of the brace members, each leg pivots by deformation of the hinge which connects it to the rest of the foot. This deformation only requires a moderate pushing-in force, which facilitates the operations of putting in place of the fastener whether they be manual, or automated. With the legs being in their retracted position, the fastener is fixed onto the panel.

If the fastener is subjected to extraction forces, these will be applied from the panel onto the flaps of which the position is locked by the presence of the finger and of the brace members which extend between the finger and the flaps. The retaining force obtained is thus particularly high. This makes it possible to prevent a possible extraction of the fastener by pulling out the body.

According to features of implementation that are particularly simple and convenient both with respect to manufacture and use:
- said brace members are situated on respective opposite sides of a median plane that is transverse to said flaps; and/or
- for each said leg, said free end is situated in the vicinity of the hinge of the other said leg in its retracted position; and/or
- at its said free end, each said brace member has a bearing surface transverse to the axial direction of said hollow when said legs are in their retracted position, said finger coming to bear on those said surfaces when it is inserted into said body; and/or
- on each said flap, the opposite surface to the surface from which said brace member extends is convex and bulge-shaped; and/or
- said finger has two longitudinal shoulders situated on two opposite surfaces and adapted to guide the translational movement of said free ends during the insertion of said finger into said body; and/or
- said foot comprises means for retaining said legs in retracted position; and possibly
- said retaining means comprise two plates facing each other and situated on the periphery of said hollow, each said plate being situated transversely and between the two said legs in retracted position; and possibly
- said retaining means further comprise a tooth on each said brace member and a re-entrant portion on each said plate by virtue of which each said brace member is adapted to snap engage with a respective said plate; and/or
- its said legs are in extended position in the absence of urging; and/or
- said finger is of plastics material; and/or
- said body has a head comprising said collar and a surface having an opening to which said hollow leads and, when said finger is inserted into said hollow, the surface of said finger at the same end as said head is substantially flush with said surface of said head; and/or
- said foot comprises an annular wall extending from said collar and delimiting said hollow; and possibly
- the fastener comprises means for snap engagement of said finger in said body, the snap engagement means comprising a bead on said finger and a frusto-conical portion of said annular wall, said portion being deformable to allow the passage of said bead on inserting said foot; and/or
- each said leg further comprises a lever for driving from the extended position to the retracted position, said lever extending in a cut-out of said flap and emerging from a portion of said hinge, said lever extending in the plane of said flap, transversely to said hinge and beyond it; and possibly
- said finger comprises facing each said leg a recess of which one wall is adapted, on withdrawal of said foot, to drive said lever towards the retracted position of said leg and/or
- each said flap is situated, in said retracted position, in a window cut out from said annular wall; and/or
- said finger comprises a stud and said annular wall comprises an aperture extending in the axial direction of said body, said aperture and said stud being adapted to guide the translational movement of said finger in said body.

The features and advantages of the invention will appear from the following description, given by way of preferred but non-limiting example, with reference to the accompanying drawings in which:
- Figure 1 is a perspective view of the fastener according to the invention, the finger not being inserted into the body;
- Figure 2 is a view in elevation of the fastener of Figure 1 with the finger partially inserted into the body;
- Figure 3 is a section view of that fastener on III-II of figure 2;
- Figure 4 is a plan view from the foot end of the body;
- Figure 5 is a view in elevation of the fastener which, on the left side, represents the finger partially inserted and the leg in retracted position, and; on the right side, the finger in locking position and the leg in extended position, and on which the body portions from the direction of viewing have been cut away to show the whole of the finger;
- Figure 6 is a perspective view of a first variant of the fastener according to the invention, this fastener comprising two plates between its legs, for holding the legs in retracted position, the finger not being inserted into the body;
- Figure 7 is a view in elevation of the body of that fastener, the legs being in extended position;
- Figure 8 is a section view of that fastener on VIII-VIII of figure 7;
- Figure 9 is a section view of that fastener on IX-IX of figure 8;
- Figure 10 is a plan view from the foot end of the body of that fastener;
- Figure 11 is a view similar to that of Figure 5 for the fastener shown in Figures 6 to 10;
- Figure 12 is a diagrammatic section view of the mold with the molded fastener;
- Figure 13 is a perspective view of an other variant of the fastener according to the invention, each of its legs comprising a lever for driving that leg from its extended position to its retracted position, the finger and the body comprising mutual snap engagement means;
- Figure 14 is a perspective view of the body of that fastener viewed from the bearing collar side ;
- Figure 15 is a perspective view of the body of that fastener viewed from the foot end;
- Figure 16 is a perspective view of the finger of that fastener;
- Figure 17 is a section view in perspective of that fastener on XVII-XVII of figure 13;
- Figure 18 is a section view in perspective of that fastener on XVIII-XVIII of figure 13;
- Figure 19 is a section view in perspective of that fastener on XIX-XIX of figure 13;
- Figure 20 is a perspective view of that fastener with the legs in extended position;
- Figure 21 is a perspective view of another variant of the fastener with the finger partially inserted;
- Figure 22 is a perspective view of the finger of that fastener;
- Figure 23 is a perspective view of another variant of the fastener with the finger partially inserted; and
- Figure 24 is a perspective view of the finger of that fastener.

The fastener 1 of molded plastics material comprises a finger 2 and a body 3.

The finger 2 is a stud of elongate parallelepiped form. It comprises a first profiled portion 4 of square section. This portion 4 has a free end having an end surface 5. Near that surface 5, a channel 6 extends on the periphery of the portion 4.

Remote from the free end, the finger 2 continues with a second portion 7. The portion 4 and the portion 7 are separated from each other by a channel 8 similar to the channel 6.

The channels 6, 8 extend in parallel planes that are each transverse to the axial direction of the finger 2. This axial direction is parallel to the axis 9 of the finger 2. The finger 2 has axial symmetry about its axis 9.

The portion 7 has a re-entrant longitudinal portion 10 on two of its opposite surfaces. Each re-entrant portion 10 extends over the whole length of the portion 7 and close to a longitudinal edge 11 of the surface to which the re-entrant portion 10 belongs.

The surfaces of portion 7 having the re-entrant portion 10 each comprise a zone 13 set back with respect to a zone 14 situated between the re-entrant portion 10 and the edge 11. The zone 14 is much less wide than is the zone 13.

Portion 7 comprises a free end 15 which is located remote from the free end 5. The edge formed between the surface of the free end 15 and each zone 13 is rounded.

Despite the existence of the set back zones 13, the general dimensions of the finger 2 in a plane transverse to the axis 9 correspond to the cross-section of the portion 4.

The body 3 is a one-piece molding and comprises a head 20 and a foot 21. The body 3 has a main axis 22.

The head 20 comprises two coaxial cylinder sections 23, 24 fixed to each other. The section 23 has a slightly greater diameter than the section 24 such that there is a shoulder 25 between the sections 23, 24. At the opposite end from that shoulder 25, section 23 has a free surface 26. The edge formed between the surface 26 and the lateral surface of the section 23 is rounded.

The head 20 is passed all the way through by a hollow 27 of square section of which the main longitudinal axis coincides with the axis 27 when the finger 2 is inserted in the hollow 27. The depth of the hollow 27 in the head 20 substantially corresponds to the length of the portion 7 of the finger 2.

On the periphery of the hollow 27, in the vicinity of the opening by which it emerges at the surface 26, is a groove 28 of semi-circular cross-section which extends in a plane transverse to the axis 22. This groove 28 corresponds to the male portion of a snap engagement system operating with a corresponding female portion. The female portion may be the channel 8 or the channel 6.

The foot 21 further comprises a support 30 and legs 31.

The legs 31 each comprise a flap 32 and a brace member 33. The legs 31 are connected to the support 30 by hinges 34.

The support 30 is of square shape and is disposed against the section 24. The hollow 27 continues by passing through the support 30 until it opens at the opposite end to section 24 of the support 30.

The support 30 is centered on the axis 22 and its sides are shorter than the diameter of the section 24.

Between the support 30 and the lateral surface of the section 24 there is a bearing collar 35 formed by the shoulder which separates that support 30 and the lateral surface of the section 24. This bearing collar 35 has a circular outer edge and a square inner edge.

Two hinges 34 emerge from along two of the opposite sides of the support 30 remote from the bearing collar 35.

A leg 31 with a hinge 34 will now be described.

The hinge 34 is thin and extends over substantially the whole of the length of the side of the support 30. In the other direction, the hinge 34 extends parallel to the axis 22, over a length equivalent to the height of the support 30.

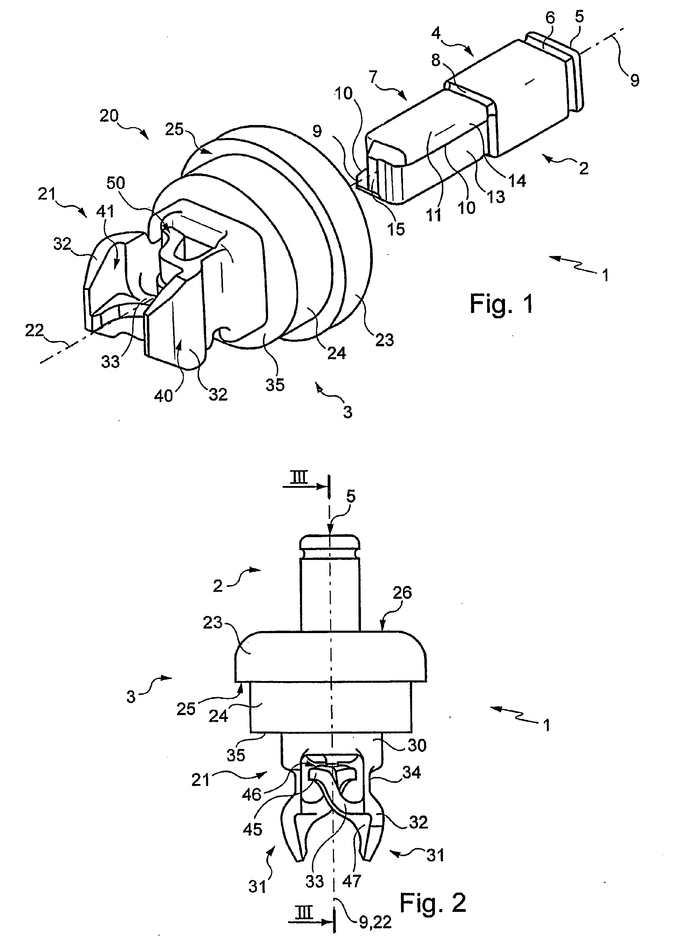

As can be seen in Figures 1 and 2, the flap 32 extends onwards from the hinge 34.

The flap 32 has an airplane wing section with an outer surface 40 and an inner surface 41. The outer surface 40 is convex and domed whereas the inner surface 41 is concave and also domed. The thickness of the flap is slightly greater adjacent the hinge 34.

The brace member 33 emerges from the inner surface 41 of the flap 32.

The brace member 33 extends in a half-space delimited by a plane P passing through the axis of the body 3 and transverse to the hinges 34.

The brace member 33 comprises a main portion of thickness comparable with that of the flap 32. This portion emerges from the inner surface 41 of the flap 32 in the immediate vicinity of the hinge 34 and extends transversely with respect to the flap 32, that is to say towards the opposite flap 32. The brace member 33 next has a portion having a slanting direction with respect to the axis 22 while projecting towards the support 30. This portion is mainly situated between the hinges 34.

Lastly, the free end 45 of the brace member 33 has a bearing surface 46 disposed facing the support 30 and the head 20. This bearing surface 46 is transversely oriented with respect to the axis 22.

The surface 46 is situated at the end of the hollow 27.

Adjacent the plane P, the brace member 33 has a reinforcement 47 in the form of a flange which extends from the free end 45 of the brace member 33 to the free end of the flap 32, such that in the plane including that reinforcement 47, the leg 31 has a substantially triangular shape of which one side belongs to the brace member 33 and a second side belongs to the flap 32.

At the opposite side of the plane P, the brace member 33 has a lateral surface 50 situated in the same plane as a lateral surface of the hinge 34 and of the flap 32.

The other brace member 33 is identical, each brace member 33 being the image of the other due to axial symmetry about the axis 22. For an observer who looks at the body 3 in the direction represented in Figure 2, the brace members 33 are superposed one behind the other and cross at the axis 22; a first brace member 33 is situated in front of the plane P whereas the second brace member 33 is situated behind that plane.

In Figures 1 and 2, the legs 31 are disposed in a retracted position.

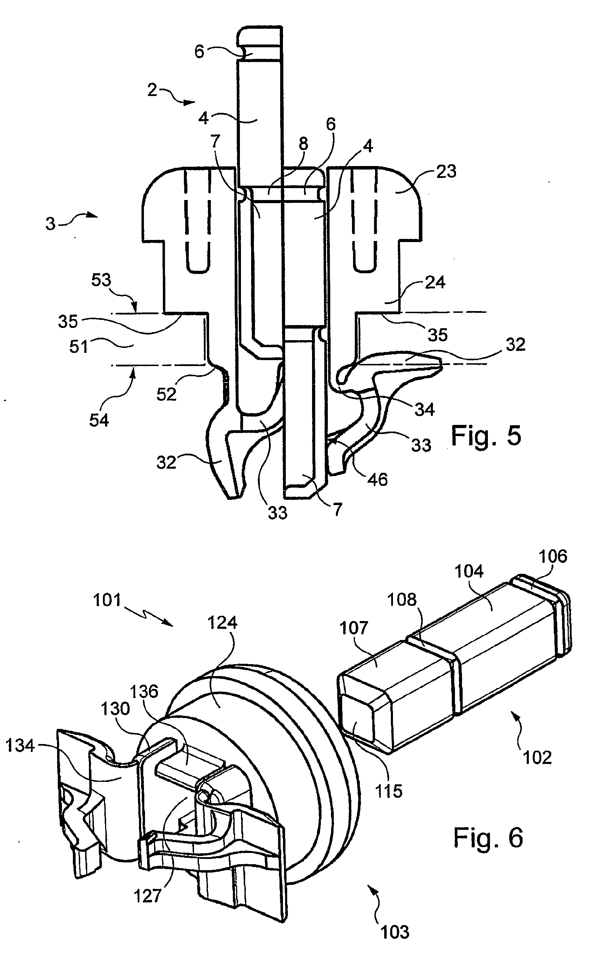

On the right side of Figure 5 is represented the extended position of a leg 31 with the finger 2 inserted into the hollow 27 in its locking position.

In this position, the flap 32 and the brace member 33 maintain the same relative position as in the retracted position. The leg 31 as a whole has rotated through 90°, the outer surface 40 of the flap 32 being brought into face to face relationship with the bearing surface 35 with the hinge 34 folded on itself. The bearing surface 46 is then situated in a plane parallel to the axis 22.

The insertion of the finger 2 in the body 3 will now be described.

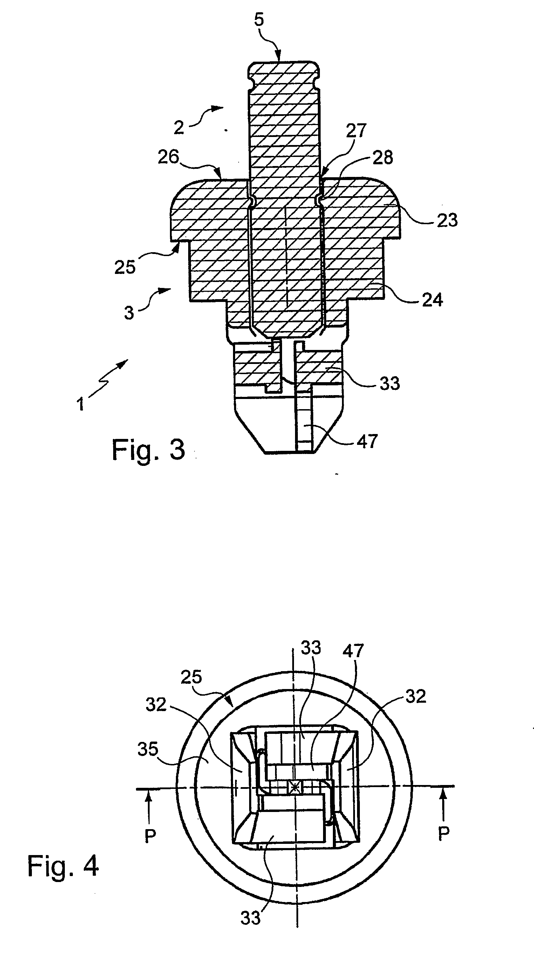

When the finger 2 is out of the body 3, the legs 31 are in their retracted position (Figure 1). The finger 2 is brought towards the hollow 27 by aligning the axes 9 and 22 such that the finger 2 may then be inserted into the square hollow 27. The set back zones 13 are oriented along planes parallel to the flaps 32. The finger 2 is then inserted in the hollow 27 until the rib 28 cooperates with the channel 8 (Figure 3). The finger 2 is then in a pre-engaged position and the legs 31 are still in retracted position.

When insertion of the finger 2 is continued, the channel 8 and the groove 28 separate and move apart whereas the surface 15 comes into contact with the bearing surfaces 46 of the brace members 33. By continuing to push on the finger 2, the brace members 33 transmit a thrust such that the brace members 33 withdraw by the folding of the hinges 34.

The surface 46 slides along the rounded surface between the surface 15 and the zone 13 until the end of the surface 50 of the brace member 33 comes into contact with the re-entrant portion 10. During this movement, the hinges 34 fold and the legs 31 turn until, for each of them, the surface 46 is in contact with the zone 13 and until the leg 31 has thus turned through 90°.

It is possible to continue to insert the finger 2 with the brace member 33 being guided along the re-entrant portion 10 and which cannot therefore slip transversely up to the edge 11 and beyond it. This would lead to the passage of the brace member 33 against the adjacent surface of the finger 2 and the return of the leg 31 in a position close to the retracted position.

The insertion continues until the channel 6 comes into contact with the rib 28 and they cooperate by snap engagement.

The surface 5 is then flush with surface 26; the finger 2 is snap engaged within the body 3 and the legs 31 are in their retracted position with the flaps 32 in face to face relationship with the bearing surfaces 35. The height of the finger 2 corresponds to the distance separating the surface 26 from the free end of a flap 32, in retracted position of the legs.

The fastener 1 is molded in two pieces: the finger 2 and the body 3. The body 3 is molded with the legs in retracted position.

The fastener 1 is adapted to be mounted on a panel 51 comprising a square opening 52 of which the dimensions correspond to those of the support 30.

For the mounting of the fastener 1 on the panel 51, the finger 2 is placed first of all in the body 3 in the pre-engaged position of the finger 2. The legs 31 are then in the retracted position.

The fastener 1 is pushed through the opening 52 of the panel 51, legs 31 first, until the bearing collar 35 comes to bear against the outer surface 53 of the panel 51.

The finger 2 is then pushed which presses in as already set out such that the legs 31 come into their extended position with the outer surface 40 in contact with the opposite surface 54 to the surface 53 of the panel 51.

The domed shape of the legs 31 adapts to panels of which the surfaces are not flat such that the fastener always remains well locked onto the panel 51 whatever the shape of its surface.

In the embodiment shown, when the finger 2 is engaged in its locking position and the fastener 1 is fixed onto the panel 51, the surface 5 is flush with the level of the surface 26 such that the finger 2 cannot be withdrawn from the body 3. The fastener 1 is not demountable.

If it is attempted to pull off the fastener, a force is exerted from the surface 54 onto the surfaces 40 of the flaps 32. This force is transmitted via the brace members 33 to the finger 2. Due to the presence of the finger 2, the legs 31 cannot fold back onto retracted position. Furthermore, as the flaps 32 are wide, the pressure which is exerted on the flaps 32 is distributed over the whole width, which also ensures good retainment on the panel 51.

When positioned on a panel of an automotive vehicle, the fastener 1, and more particularly the periphery of the section 24, serves for attaching the loop at the end of a cord connected to a parcel shelf. The parcel shelf covers the rear space of the trunk and pivots under the effect of the opening or closing of the hatch of the vehicle, the parcel shelf being pulled or released via the cord engaged on the fastener 1.

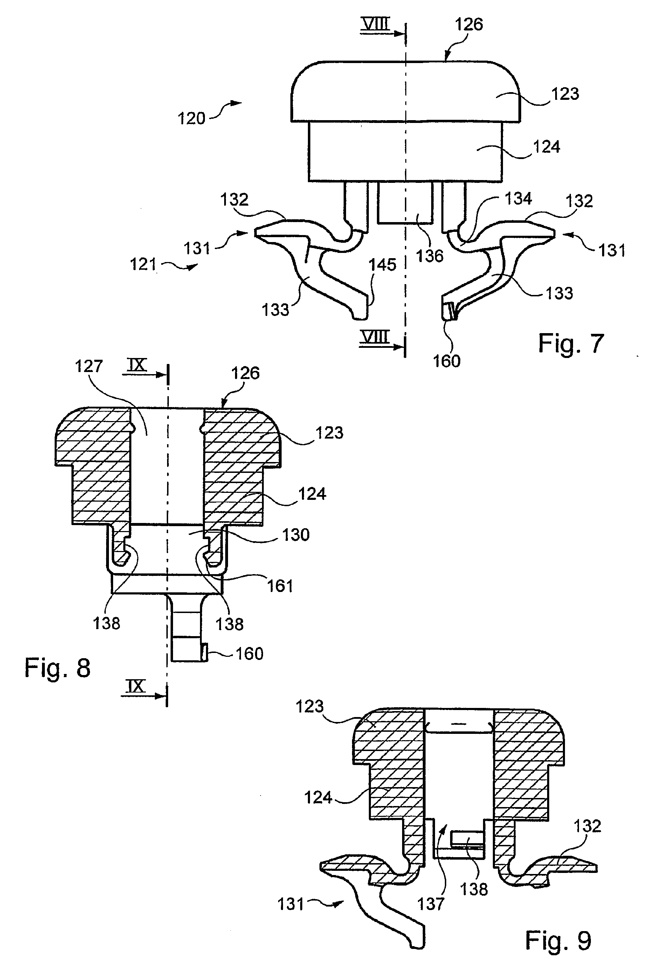

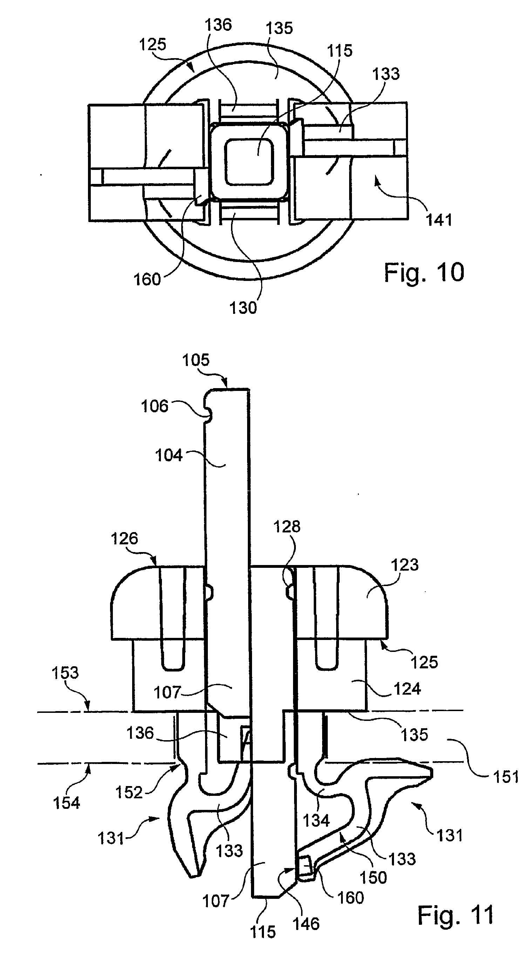

With reference to Figures 6 to 11, a fastener according to a variant embodiment will now be described.

For this variant, the same numerical references as earlier have been kept for similar parts, increased by the number 100.

The portion 107 of the finger 102 has a square section identical to that of the portion 104; there is no re-entrant portion. The edge situated between the surface 115 and the adjacent surfaces is rounded.

The support 130 comprises the two portions situated between the section 124 and the hinges 134. Between these two portions, the support 130 is discontinuous and has two plates 136 of the same height as the rest of the support 130.

Each plate 136 extends along the periphery of the hollow 127, they face each other and extend between the two support portions 130 without being connected thereto.

On their inner surface 137, each plate 136 comprises a groove 138 which extends transversely to the axial direction of the body 103.

Each groove 138 extends from an edge of the surface 137 towards the opposite edge over a distance slightly greater than half of the distance between those two opposite edges.

Each groove 138 is disposed in face to face relationship to the portion of surface 137 of the opposite plate 136 not having any groove 138.

At its end 145 projecting from its surface 150, each brace member 133 comprises a tooth 160 which corresponds to a small parallelepiped protuberance.

The grooves 138 are adapted to cooperate with the teeth 160 of the brace members 133. Each groove 138 cooperates with one of the two teeth 160 located facing that groove 138 in retracted position of the legs 131.

Along its edge situated at its free end, the surface 137 has a chamfer 161 so as to form a snap engagement ramp for the tooth 160.

The body 103 is molded with the legs 131 in their extended position, it being possible for the finger 102 to be formed as a one-piece molding with the body 103.

The finger 102 is then positioned along the same axis as the body 103. Frangible bridges connect the finger 102 and the body 103 at the surface 126. The free end 115 is situated slightly to the exterior of the body 103.

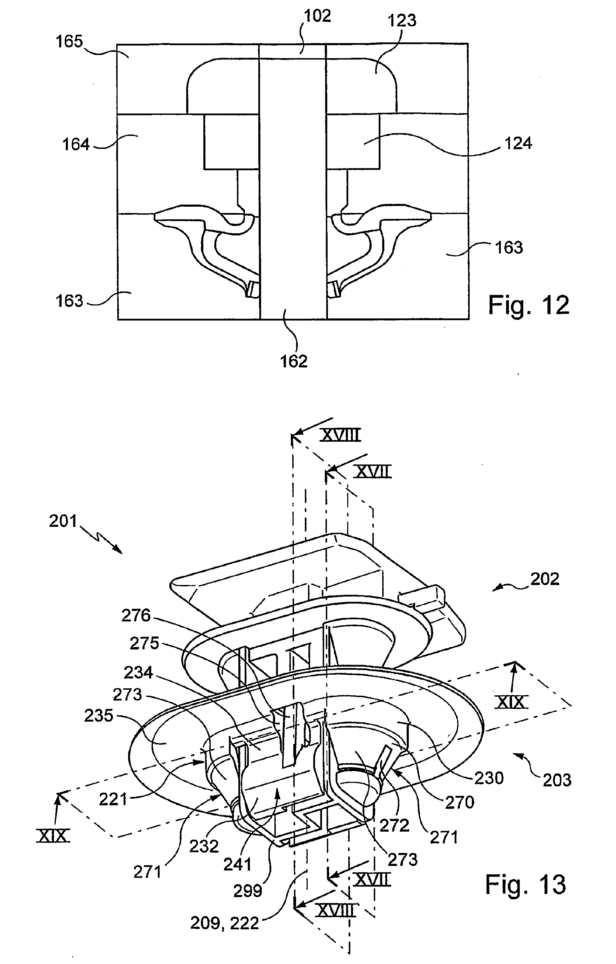

Since the legs 131 are molded in extended position, a mold part 162 may occupy the hollow 127 up to the level of the surface 115 of the finger 102 (Figure 12). Slides 163 and two plates 164, 165 endowed with an aperture are provided to mold the legs 131, the support 130 and the sections 124, 123.

To strip the fastener 1 from the mold, the slides 163 are removed and then the plate 165.

Next, the body 103 is removed by passing the latter through the aperture of the plate 164. Due to the initial extended position of the legs 131 and the dimensions of the aperture of the plate 164 on the side provided for molding the support 130, when the body 103 is withdrawn, the legs 131 are constrained to rotate about their hinge 134. The passage of the legs 131 through the aperture is only possible once the legs are at 90° from the extended position, that is to say once the legs are in retracted position.

At the end of rotation, the teeth 160 have come into contact with the plates 136 and more particularly with the chamfer 161 which they have climbed until snap engagement in the grooves 138.

Once the body 103 has been stripped from the mold, the legs 131 remain in their retracted position due to the snap engagement of the teeth 160 in the grooves 138.

Locking of the fastener 101 on the panel 151 is carried out as before apart from the fact that when the finger 102 is molded with the body 103 along the axis of the body 103, it suffices to press on the finger 102 to break the frangible bridges and enable the finger 102 to push into the hollow 127 until it is in pre-engaged position of the finger 102. This step may be carried out prior to the use of the fastener 101 with the panel 151.

When the surface 115 comes into contact with the surfaces 146 of the brace members 133, the finger 102 comes to bear against the brace members 133, the effect of which is to disengage the teeth 160 from the grooves 138 and to rotate the legs 131 to their extended position. This rotation is all the more easy in that the extended position is the position in which the legs 131 were molded such that this position corresponds to a resting position of the legs 131 in which they are located spontaneously if there is no constraint of snap engagement type by the brace members 133 on the plates 136.

The fastener 101 is here locked due to the fact of the presence of the finger 102 which, via the brace members 133, holds the flaps 132 against the panel 151 but also by the fact that this position corresponds to the molding position of the legs. Thus, a force exerted on the fastener 101 intended to make the legs 131 pass from their extended position to their retracted position is opposed by the holding force exerted by the finger 102 and the force of the legs 131 towards the extended position.

A description will now be given of another variant of the embodiment illustrated in Figures 13 to 20. For this variant, the same numerical references as before have been kept for similar parts, increased by the number 200 with respect to the numerical references of the fastener shown in Figures 1 to 5.

The fastener 201 comprises a finger 202 and a body 203. The fastener 201 is of oblong general form.

The head 220 comprises a bearing collar 235 having on one side a free surface 226. The bearing collar 235 extends annularly around the hollow 227. This collar 235 is slightly oriented towards the foot 221. An annular lateral wall 270 emerges from the opposite surface to the surface 226. The collar 235 and the wall 270 emerge from along the same oblong contour.

The wall 270 comprises a support 230 extending in the direction of the axis 222 of the body 203 over a specific height of the same order of magnitude as the width of the bearing collar 235.

The support 230 comprises two semi-cylindrical portions opposite to each other. At the opposite end of each semi-cylindrical portion to the bearing collar 235 extends a semi-frusto-conical portion 271. Each portion 271 is a half frustum cut by a plane passing through its axis.

This portion 271 has a cut-out 272 extending over practically the whole height of the frustum, and emerging at the free end of the portion 271 so as to divide the portion onto two tabs 273 of the same dimensions. Each tab 273 is thus adapted to be slightly deformed.

The two portions 271 face each other and emerge from the semi-cylindrical parts of the support 230.

Between these semi-cylindrical parts, the support 230 has two straight portions of which the height is a little less. It is from these straight parts that the hinges 234 emerge, at the end of which are located the legs 231.

The legs 231 face each other and the brace members 233, in retracted position of the legs, are each situated respectively on opposite sides of a median plane of the legs 231 passing through the axis 222.

At each leg 231 the body 203 comprises a cut-out 275. Each cut-out 275 extends from the flap 232 through the hinge 234 and up to the support part 230 and emerges at the surface 226.

In the cut-out 275, there extends a drive lever 276 which is straight and of square section. It emerges from the surface 241 of the flap 232 and extends towards the surface 226 and slightly beyond it.

The hollow 227 has an oblong cross-section transversely to the axis 222 which tends to retract progressively on going away from the surface 226 due to the existence of the portions 273.

The finger 202 here comprises a head 277 comprising in the center a thick portion 278 having at the free surface end a blind hole 279 having a key-shaped cross-section. The free surface is extended by two jutting facets 280.

Under this portion 278, there extends a plate 281 of oblong form serving as a plate for abutment against the surface 226 of the foot 203 when the finger 202 is inserted into the body 203. From the other side of the that plate 281 with respect to portion 278, extends the rest of the finger 202 which also has an oblong general form with two identical end pillars 282 opposite each other. The pillars 282 are each situated against a rectangular plate 299 which extends transversely to the plate 281 while emerging from that plate 281 and extending to the free end of the finger 202.

Between the two pillars 282 there extends a portion having a first stage 283 which extends from the plate 281 and a second stage 284 which extends from the first stage 283.

Each pillar 282 has, starting from the plate 281, an outer surface 285 of semi-frusto-conical form generally corresponding to the inner surface of the semi-frusto-conical part 271 of the foot 203. This surface 285 is continued by a semi-cylindrical surface which is interrupted by a first bead 286 and then towards the free end by a semi-annular rib 287 and lastly, right at the free end, by a second bead 288.

The legs 231 have a reinforcement 247 but which is situated in the center with respect to the two lateral surfaces 250 of the brace members 233.

The first stage 283 comprises two identical half stages disposed on respective opposite sides of a median plane 290 which is also a plane of symmetry with respect to which the two pillars 282 are images of each other. Each half stage has a rectangular cavity 291 which has a small recess 292 adjacent the plane 290 and the second stage 284. This cavity 291 is open to the outside via two opposite openings 293 and 294. The opening 293 has the same width as the drive lever 276. The opening 294 is wider than the opening 293 and less wide than the brace members 233. With regard to their height, the opening 294 has a height corresponding to the general height of the cavity 291 whereas the opening 293 is higher due to the fact that it extends adjacent the recess 292. On one face of the first stage 283, the opening 293 of a half stage and the opening 294 of the other half stage extend side by side.

The second stage 284 comprises a single wall 295 of stepped form, the re-entrant portion being located at the plane 290. The two facets of wall 295 on respective opposite sides of that re-entrant portion extend transversely to the plane 290. The height of the re-entrant portion is smaller than the width of the plates 299 such that the wall facets 295 are situated slightly set back with respect to the general dimensions of the plates 299.

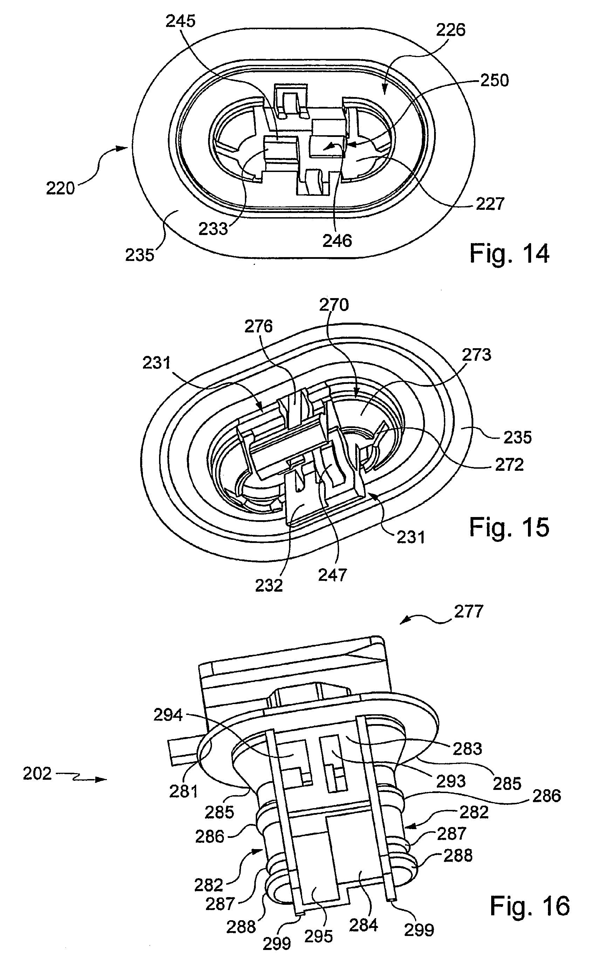

For an observer who looks at the finger 202 in a direction of observation such as that of Figure 16, the facet of wall 295 furthest from the observer is the one situated under the opening 294 whereas the wall facet 295 closest to the observer is that situated under the opening 293.

Each leg 231 is positioned in a recess delimited by a plate 299, a facet of wall 295 and the re-entrant portion situated between the two facets of wall 295.

The use of the fastener 201 will now be described.

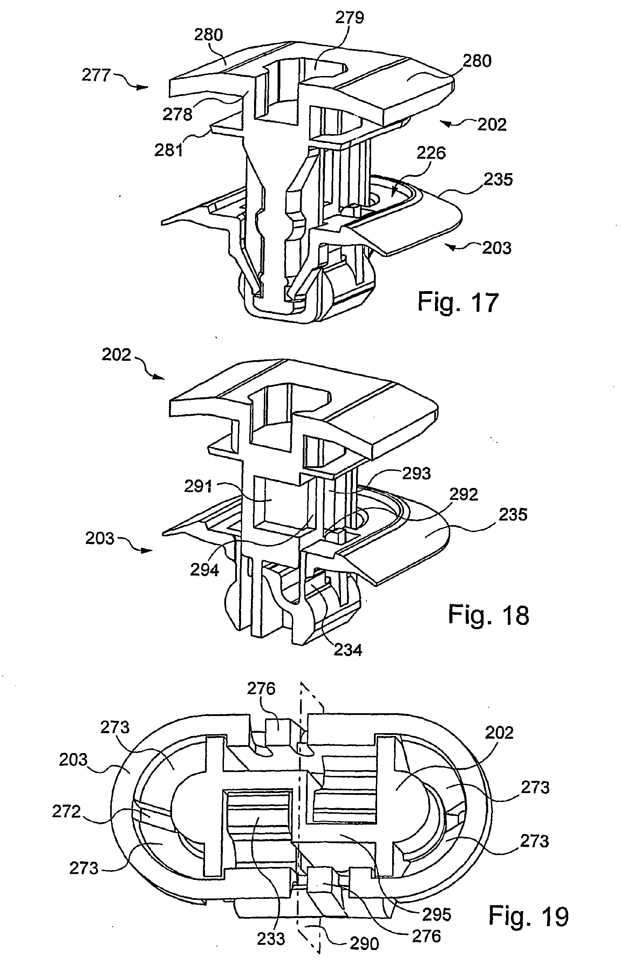

When the finger 202 is inserted into the body 203, it is the bead 288 and the second stage 284 which enter the hollow 227 first. Due to the profile of stepped form, the brace members 233 initially meet no resistance such that the legs 231 remain in retracted position. With pushing in, the beads 288 come into contact with the inner surface of the semi-frusto-conical portions. By continued pushing in, the tabs 273 deform under the pressure of the beads 288 until these latter pass under the semi-frustoconical portions 271, the finger 202 then being snap engaged in a pre-engaged position in the body 203 with its legs 231 in retracted position. In this position, the end surfaces 246 of the brace members 233 are slightly away from the separation wall between the two stages 283, 284 (Figure 18).

By continued pushing on the finger 202, the rib 287 pushes on the semi-frusto-conical portions 271 such that the tabs 273 deform and such that those ribs 287 pass under the portions 273. At the same time, the separation wall between the stages 283, 284, and more particularly its surface adjacent the second stage 284 comes to bear against the surfaces 246 of the brace members 233 such that the legs 231 are constrained to turn about their hinge 234 until a rotation through 90° has been made.

During this rotational movement, the end part of the lever 276 does not hinder the rotation of the leg 231 about the hinge 234 since that end then directly enters into a cavity 291 delimited by an opening 293.

The insertion of the finger 202 continues until the bead 286 comes into contact with the inner surfaces of the semi-frusto-conical portions 271. The snap engagement then occurs in the same way as for the beads 288.

At this stage, the legs 231 are in extended position and the finger 202 is inserted until the outer surface of the portions 285 comes into contact with the inner surface of the portions 271. The surface of the plate 281 situated adjacent the stages 283, 284 then comes against the free surface 226 of the body 203.

By contrast to the fasteners described earlier, here the free surface of the finger and the free surface 228 are not flush.

It is possible to demount the fastener 1; by exerting a pull on the finger 202, it is driven in an extraction direction opposite to the preceding direction of insertion, the legs 231 being in extended position.

The bead 286 and the rib 287 have symmetrical slopes such that it is possible for the bead 286 and the rib 287 to pass the tabs 273 in the opposite direction to that described above. Concerning the legs 231, when the drive lever 276 reaches the back of the cavity 291 and more particularly the back of the recess 292, the back of the recess presses on the end of the lever 276 such that the latter is rotated and with it the whole of the leg 231. The rotation is made possible by the fact that the free end 245 of the brace members 233 is already situated adjacent the second stage 284.

The leg 231 then rotates through 90° which enables it to return to a retracted position. The free end 245 of the brace members 233 is then situated against one of the facets of wall 295 and this contact leads to rubbing when the extracting force is continued. This rubbing enables the leg 231 to be perfectly disposed in its retracted position and to avoid a certain slackening due to its disposition in extended position prior to this return to retracted position.

The bead 288 on the other hand does not have a slope in the extraction direction such that in principle the finger 202 cannot be totally extracted from the body 203, the tabs 273 remaining blocked against the bead 288.

The fastener can then be again placed on a panel through an opening thereof.

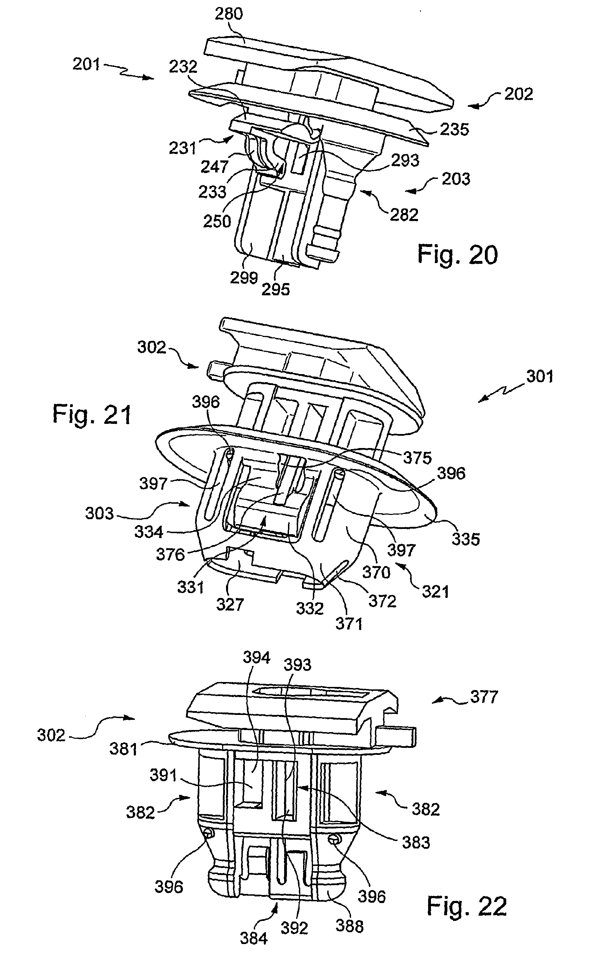

With reference to Figure 21, another variant of the embodiment will now be described. For this variant, the same numerical references as before have been kept for similar parts, increased by the number 100 with respect to the numerical references of the fastener shown in Figures 13 to 20.

The fastener 301 comprises a finger 302 similar to the finger 202 in that it has a head 377, a plate 381, a first stage 383 with cavities 391 and two openings 393 and 394 for each cavity 391, a second stage 384 and pillars 382 on respective opposite sides of the first and second stages 383, 384.

The second stage 384 is also of stepped form with the two facets of wall 395 here being pierced such that they compose a support at the free end of the finger 302 which extends between the re-entrant portion forming wall and the pillars 382 and a rectangular protrusion which extends towards the first stage 383 partly filling the existing rectangular opening. The pillars 382 are straight in the zone corresponding to the first stage 383; they are of semi-cylindrical form with depressions of triangular cross-section over practically the whole of their height.

At the second stage 384, the pillars have a semi-frusto-conical outer surface of which the cross-section diminishes towards the free end of the foot 382. On each surface there are disposed two circular studs 396. These studs 396 jut slightly beyond the general dimensions of the pillars 382. Lastly, the pillars 382 end with a bead 388.

The body 303 comprises a lateral wall 370 which extends starting from the collar 335 over a greater height than the combined heights of the support 330, the hinges 334 and the flaps 332 such that the hinges 334 and the flaps 332 are positioned in two windows of that wall. On respective opposite sides of each of those windows are two apertures 397 adapted to receive the studs 396. The wall 370 ends with a reduction in its cross-section with cut-outs 372 enabling a slight change in shape of the frustoconical portions 371 situated at the free end of the body 303.

With respect to the preceding variant, the insertion of the finger 302 is here guided by means of the stud 396 - aperture 397 systems. Moreover, the snap engagement 302 on the body 303 is only made when the finger 302 has reached the end of travel by the cooperation of the bead 388 with the portions 371.

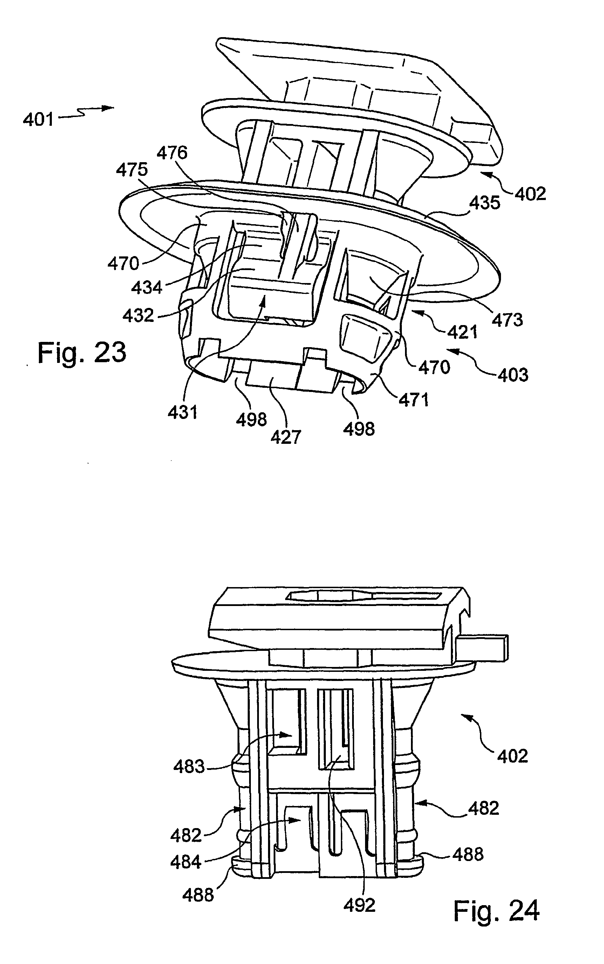

With reference to Figures 23, 24, still another variant of the embodiment is now described for which the numerical references are the same for similar parts, and are increased by the figure 100 with respect to the numerical references of the fastener represented in Figures 21, 22 and by 200 with respect to the numerical references of the fastener represented in Figures 13 to 20.

The fastener 401 comprises a body 403 having all the members of the body 203, as well as an annular wall 470 defining a window in which the legs 431 are positioned. The wall 470 also comprises windows in which the tabs 473 extend. The wall 470 retracts on approaching its free end. It has four square cut-outs 498 giving slight pliability to this wall part for the needs of snap engagement. This body 403 corresponds to the body 203 of which the support has been extended along a wall similar to the wall 370 of the body 303.

The finger 402 comprises first and second stages 483, 484 identical to the stages 383, 384 of the finger 302. The pillars 482 are identical to the pillars 282.

The present invention is not limited to the embodiment described and shown but encompasses any variant execution thereof.

## Claims

1. A fastener for blind mounting on a panel (51, 151) provided with an opening (52, 152), comprising a body (3, 103, 203, 303, 403), of plastics material, having an axial hollow (27, 127, 227, 327, 427) and comprising a collar (35, 135, 235, 335, 435) for bearing on the periphery of said opening (52, 152) and a foot (21, 121, 221) for holding said body (3, 103, 203, 303, 403) on said panel (51, 151) adapted to pass into said opening (52, 152), said fastener (1, 101, 201, 301, 401) further comprising a finger (2, 102, 202, 302, 402) adapted to be inserted into said hollow (27, 127, 227, 327, 427) and to adopt a locking position in which said fastener (1, 101, 201, 301, 401) is fixed to said panel (51, 151), wherein that said foot (21, 121, 221) comprises two legs (31, 131, 231, 331, 431) each comprising a brace member (33, 133, 233), being adapted to pivot around a hinge (34, 134, 234, 334, 434) which connects it to the remainder of said foot (21, 121, 221), each said brace member (33, 133, 233) of a respective said leg (31, 131, 231, 331, 431) extending to a free end (45, 145, 245), each leg (31, 131, 231, 331, 431) being able to adopt a retracted position and an extended position in which its flap (32, 132, 232, 332, 432) has pivoted outwardly with respect to said retracted position, said legs (31, 131, 231, 331, 431) passing from said retracted position to said extended position on insertion of said finger (2, 102, 202, 302, 402) into said body (3, 103, 203, 303, 403), said free end (45, 145, 245) of each brace member (33, 133, 233) abutting said finger (2, 102, 202, 302, 402) when it is inserted into said hollow (27, 127, 227, 327, 427) in said locking position, by virtue of which each said leg (31, 131, 231, 331, 431) is held in the extended position, **characterized in that** each leg comprises a **flap (32, 132, 232, 332, 432)** each leg (31, 131, 231, 331, 431) being able to adopt a retracted position **in which its flap (32, 132, 232, 332, 432) faces the flap (32, 132, 232, 332, 432) of the other said leg (31, 131, 231, 331, 431) and its brace member (33,133, 233) is oriented towards its hinge (34, 134, 234, 334, 434) and towards the other said leg (31, 131, 231, 331, 431), its brace member (33, 133, 233) being superposed with respect to the brace member (33, 133, 233) of the other said leg (31, 131, 231, 331, 431) between said flaps (32, 132, 232, 332, 432).**

2. A fastener according to claim 1, **characterized in that** said brace members (33, 133, 233) are situated on respective opposite sides of a median plane (P) that is transverse to said flaps (32, 132, 232, 332, 432).

3. A fastener according to any one of claims 1 or 2, **characterized in that** for each said leg (31, 131, 231, 331, 431), said free end (45, 145, 245) is situated in the vicinity of the hinge (34, 134, 234, 334, 434) of the other said leg (31, 131, 231, 331, 431) in its retracted position.

4. A fastener according to any one of claims 1 to 3, **characterized in that** at its said free end (45, 145, 245), each said brace member (33, 133, 233) has a bearing surface (46, 146, 246) transverse to the axial direction of said hollow (27, 127, 227, 327, 427) when said legs (31, 131, 231, 331, 431) are in their retracted position, said finger (2, 102, 202, 302, 402) coming to bear on those said surfaces (46, 146, 246) when it is inserted into said body (3, 103, 203, 303, 403).

5. A fastener according to any one of claim 1 to 4, **characterized in that** on each said flap (32, 132, 232, 332, 432), the opposite surface (40) to the surface (41) from which said brace member (33, 133, 233) extends is convex and bulge-shaped.

6. A fastener according to any one of claims 1 to 5, **characterized in that** said finger (2) has two longitudinal shoulders (10) situated on two opposite surfaces and adapted to guide the translational movement of said free ends (45) during the insertion of said finger (2) into said body (3).

7. A fastener according to any one of claims 1 to 6, **characterized in that** said foot (121) comprises means for retaining said legs (131) in retracted position.

8. A fastener according to claim 7, **characterized in that** said retaining means comprise two plates (136) facing each other and situated on the periphery of said hollow (127), each said plate (136) being situated transversely and between the two said legs (131) in retracted position.

9. A fastener according to claim 8, **characterized in that** said retaining means further comprise a tooth (160) on each said brace member (133) and a re-entrant portion (138) on each said plate (136) by virtue of which each said brace member (133) is adapted to snap engage with a respective said plate (136).

10. A fastener according to any one of claims 7 to 9, **characterized in that** its said legs (131) are in extended position in the absence of urging.

11. A fastener according to any one of claims 1 to 10, **characterized in that** said finger (2, 102, 202, 302, 402) is of plastics material.

12. A fastener according to any one of claims 1 to 11, **characterized in that** said body (3, 103) has a head (20, 120) comprising said collar (35, 135) and a surface (26, 126) having an opening to which said hollow (27, 127) leads and **in that**, when said finger (2, 102) is inserted into said hollow (27, 127), the surface (5, 105) at the end of said finger (2, 102) at the same end as said head (20, 120) is substantially flush with said surface (26, 126) of said head (20, 120).

13. A fastener according to any one of claims 1 to 12, **characterized in that** said foot (221, 321, 421) comprises an annular wall (270, 370, 470) extending from said collar (235, 335, 435) and delimiting said hollow (227, 327, 427).

14. A fastener according to claim 13, **characterized in that** it comprises means for snap engagement of said finger (202, 302, 402) in said body, the snap engagement means comprising a bead (288, 388, 488) on said finger (202, 302, 402) and a frusto-conical portion (271, 371, 471) of said annular wall (270, 370, 470), said portion (271, 371, 471) being deformable to allow the passage of said bead (288, 388, 488) on inserting said foot (202, 302, 402).

15. A fastener according to any one of claims 13 or 14, **characterized in that** each said leg (231, 331, 431) further comprises a lever (276, 376, 476) for driving from the extended position to the retracted position, said lever (276, 376, 476) extending in a cut-out (275, 375, 475) of said flap (232, 332, 432) and emerging from a portion of said hinge (234, 334, 434), said lever (276, 376, 476) extending in the plane of said flap (232, 332, 432), transversely to said hinge (234, 334, 434) and beyond it.

16. A fastener according to claim 15, **characterized in that** said finger (202, 302, 402) comprises facing each said leg (231, 331, 431) a recess (292, 392, 492) of which one wall is adapted, on withdrawal of said finger (202, 302, 402), to drive said lever (276, 376, 476) towards the retracted position of said leg (231, 331, 431).

17. A fastener according to any one of claims 13 to 16, **characterized in that** each said flap (332, 432) is situated, in said retracted position, in a window cut out from said annular wall (370, 470).

18. A fastener according to any one of claims 13 to 17, **characterized in that** said finger (302) comprises a stud (396) and said annular wall (370) comprises an aperture (397) extending in the axial direction of said body (303), said aperture (397) and said stud (396) being adapted to guide the translational movement of said finger (302) in said body (303).

## Patentansprüche

1. Halterung für die blinde Montage an einer mit einer Öffnung (52, 152) versehenen Tafel (51, 151) mit einem Körper (3, 103, 203, 303, 403) aus Kunststoffmaterial, der eine axiale Aushöhlung (27, 127, 227, 327, 427) hat und einen Bund (35, 135, 235, 335, 435) zum Anliegen am Umfang der Öffnung (52, 152) umfasst sowie einen Fuß (21, 121, 221) zum Halten des Körpers (3, 103, 203, 303, 403) an der Tafel (51, 151), wobei der Fuß geeignet ist, in die Öffnung (52, 152) zu gehen, wobei die Halterung (1, 101, 201, 301, 401) ferner einen Finger (2, 102, 202, 302, 402) umfasst, der geeignet ist, in die Aushöhlung (27, 127, 227, 327, 427) eingeführt zu werden und eine Verriegelungsposition einzunehmen, in der die Halterung (1, 101, 201, 301, 401) an der Tafel (51, 151) befestigt ist, wobei der Fuß (21, 121, 221) zwei Schenkel (31, 131, 231, 331, 431) umfasst, die jeweils ein Strebenelement (33, 133, 233) umfassen, das geeignet ist, um ein Scharnier (43, 134, 234, 434) zu schwenken, das es mit dem Rest des Fußes (21, 121, 221) verbindet, wobei sich jedes Strebenelement (33, 133, 233) des jeweiligen Schenkels (31, 131, 231, 331, 431) zu einem freien Ende (45, 145, 245) erstreckt, wobei jeder Schenkel (31, 131, 231, 331, 431) eine zurückgezogene Position und eine ausgefahrene Position einnehmen kann, in der seine Klappe (32, 132, 232, 332, 432) bezüglich der zurückgezogenen Position nach außen geschwenkt hat, wobei die Schenkel (31, 131, 231, 331, 431) aus der zurückgezogenen Position in die ausgefahrene Position gehen, wenn der Finger (2, 102, 202, 302, 402) in den Körper (3, 103, 203, 303, 403) eingeführt wird, wobei das freie Ende (45, 145, 245) jedes Strebenelements (33, 133, 233) an den Finger (2, 102, 202, 302, 402) anschlägt, wenn es in die Aushöhlung (27, 127, 227, 327, 427) in der Verriegelungsposition eingeführt wird, wodurch jeder Schenkel (31, 131, 231, 331, 431) in der ausgefahrenen Position gehalten wird, **dadurch gekennzeichnet, dass** jeder Schenkel eine Klappe (32, 132, 232, 332, 432) umfasst, wobei jeder Schenkel (31, 131, 231, 331, 431) eine zurückgezogene Position einnehmen kann, in der seine Klappe (32, 132, 232, 332, 432) der Klappe (32, 132, 232, 332, 432) des anderen Schenkels (31, 131, 231, 331, 431) gegenüberliegt und sein Strebenelement (33, 133, 233) zu seinem Scharnier (34, 134, 234, 334, 434) und zu dem anderen Schenkel (31, 131, 231, 331, 431) ausgerichtet ist, wobei sein Strebenelement (33, 133, 233) über dem Strebenelement (33, 133, 233) des anderen Schenkels (31, 131, 231, 331, 431) zwischen den Klappen (32, 132, 232, 332, 432) liegt.

2. Halterung nach Anspruch 1, **dadurch gekennzeichnet, dass** die Strebenelemente (33, 133, 233) auf jeweiligen gegenüberliegenden Seiten einer mittleren Ebene (P), die quer zu den Klappen (32, 132, 232, 332, 432) verläuft, angeordnet sind.

3. Halterung nach Anspruch 1 oder 2, **dadurch gekennzeichnet, dass** das freie Ende (45, 145, 245) für jeden Schenkel (31, 131, 231, 331, 431) in der Nähe des Scharniers (34, 134, 234, 334, 434) des anderen Schenkels (31, 131, 231, 331, 431) in seiner zurückgezogenen Position angeordnet ist.

4. Halterung nach einem der Ansprüche 1 bis 3, **dadurch gekenntzeichnet, dass** jedes Strebenelement (33, 133, 233) an seinem freien Ende (45, 145, 245) eine Lagerfläche (46, 146, 246) hat, die quer zur axialen Richtung der Aushöhlung (27, 127, 227, 327, 427) verläuft, wenn die Schenkel (31, 131, 231, 331, 431) in ihrer zurückgezogenen Position sind, wobei sich der Finger (2, 102, 202, 302, 402) an die Flächen (46, 146, 246) anlegt, wenn er in den Körper (3, 103, 203, 303, 403) eingeführt wird.

5. Halterung nach einem der Ansprüche 1 bis 4, **dadurch gekennzeichnet, dass** an jeder Klappe (32, 132, 232, 332, 432) die der Fläche (41), von der aus sich das Strebenelement (33, 133, 233) erstreckt, gegenüberliegende Fläche (40) konvex und bauchförmig ist.

6. Halterung nach einem der Ansprüche 1 bis 5, **dadurch gekennzeichnet, dass** der Finger (2) zwei Längsschultern (10) hat, die an zwei gegenüberliegenden Flächen angeordnet und geeignet sind, die Translationsbewegung der freien Enden (45) während der Einführung des Fingers (2) in den Körper (3) zu führen.

7. Halterung nach einem der Ansprüche 1 bis 6, **dadurch gekennzeichnet, dass** der Fuß (121) Mittel zum Halten der Schenkel (131) in der zurückgezogenen Position umfasst.

8. Halterung nach Anspruch 7, **dadurch gekennzeichnet, dass** die Haltemittel zwei Platten (136) umfassen, die einander gegenüberliegen und am Umfang der Aushöhlung (127) angeordnet sind, wobei jede Platte (136) quer und zwischen den beiden Schenkeln (131) in der zurückgezogenen Position angeordnet ist.

9. Halterung nach Anspruch 8, **dadurch gekennzeichnet, dass** die Haltemittel ferner einen Zahn (160) an jedem Strebenelement (133) und einen Wiedereinführungsabschnitt (138) an jeder Platte (136) umfassen, dank derer jedes Strebenelement (133) geeignet ist, mit einer jeweiligen Platte (136) in Eingriff zu schnappen.

10. Halterung nach einem der Ansprüche 7 bis 9, **dadurch gekennzeichnet, dass** die Schenkel (131) in der ausgefahrenen Position sind, wenn kein Drängen vorliegt.

11. Halterung nach einem der Ansprüche 1 bis 10, **dadurch gekenntzeichnet, dass** der Finger (2, 102, 202, 302, 402) aus Kunststoffmaterial ist.

12. Halterung nach einem der Ansprüche 1 bis 11, **dadurch gekennzeichnet, dass** der Körper (3, 103) einen Kopf (20, 120) mit dem Bund (35, 135) und eine Fläche (26, 126) mit einer Öffnung hat, zu der die Aushöhlung (27, 127) führt, und dass die Fläche (5, 105) am Ende des Fingers (2, 102) am selben Ende wie der Kopf (20, 120) im Wesentlichen bündig mit der Fläche (26, 126) des Kopfs (20, 120) ist, wenn der Finger (2, 102) in die Aushöhlung (27, 127) eingeführt ist.

13. Halterung nach einem der Ansprüche 1 bis 12, **dadurch gekennzeichnet, dass** der Fuß (221, 321, 421) eine ringförmige Wand (270, 370, 470) umfasst, die sich vom Bund (235, 335, 435) erstreckt und die Aushöhlung (227, 327, 427) begrenzt.

14. Halterung nach Anspruch 13, **dadurch gekennzeichnet, dass** sie Mittel zum Schnappeingriff des Fingers (202, 302, 402) in den Körper umfasst, wobei die Schnappeingriffmittel einen Wulst (288, 388, 488) am Finger (202, 302, 402) und einen kegelstumpfförmigen Abschnitt (271, 371, 471) der ringförmigen Wand (270, 370, 470) umfassen, wobei der Abschnitt (271, 371, 471) deformierbar ist, um das Hindurchgehen des Wulsts (288, 388, 488) beim Einrühren des Fußes (202, 302, 402) zu gestatten.

15. Halterung nach Anspruch 13 oder 14, **dadurch gekennzeichnet, dass** jeder Schenkel (231, 331, 431) ferner einen Hebel (276, 376, 476) zum Treiben aus der ausgefahrenen Position in die zurückgezogene Position umfasst, wobei sich der Hebel (276, 376, 476) in einem Ausschnitt (275, 375, 475) der Klappe (232, 332, 432) erstreckt und aus einem Abschnitt des Scharniers (234, 334, 434) austritt, wobei sich der Hebel (276, 376, 476) in der Ebene der Klappe (232, 332, 432) erstreckt, quer zum Scharnier (234, 334, 434) und darüber hinaus.

16. Halterung nach Anspruch 15, **dadurch gekennzeichnet, dass** der Finger (202, 302, 402) eine Ausnehmung (292, 392, 492) umfasst, die jedem Schenkel (231, 331, 431) gegenüberliegt und von der eine Wand geeignet ist, beim Zurückziehen des Fingers (202, 302, 402) den Hebel (276, 376, 476) zur zurückgezogenen Position des Schenkels (231, 331, 431) zu treiben.

17. Halterung nach einem der Ansprüche 13 bis 16, **dadurch gekennzeichnet, dass** jede Klappe (332, 432) in ihrer zurückgezogenen Position in einem aus der ringförmigen Wand (370, 470) ausgeschnittenen Fenster angeordnet ist.

18. Halterung nach einem der Ansprüche 13 bis 17, **dadurch gekennzeichnet, dass** der Finger (302) einen Zapfen (396) umfasst und die ringförmige Wand (370) eine Öffnung (397) umfasst, die sich in der axialen Richtung des Körpers (303) erstreckt, wobei die Öffnung (397) und der Zapfen (396) geeignet sind, die Translationsbewegung des Fingers (302) in den Körper (303) zu führen.

## Revendications

1. Attache à monter en aveugle sur un panneau (51, 151) muni d'une ouverture (52, 152), comportant un corps (3, 103, 203, 303, 403), en matière plastique, présentant un creux axial (27, 127, 227, 327, 427) et comportant une collerette d'appui (35, 135, 235, 335, 435) sur le pourtour de ladite ouverture (52, 152) et un pied de maintien (21, 121, 221) dudit corps (3, 103, 203, 303, 403) sur ledit panneau (51, 151) adapté à passer dans ladite ouverture (52, 152), ladite attache (1, 101, 201, 301, 401) comportant en outre un doigt (2, 102, 202, 302, 402) adapté à être inséré dans ledit creux (27, 127, 227, 327, 427) et à prendre une position de verrouillage dans laquelle ladite attache (1, 101, 201, 301, 401) est fixée audit panneau (51, 151), ledit pied (21, 121, 221) comportant deux pattes (31, 131, 231, 331, 431) comportant chacune une console (33, 133, 233), adaptée à pivoter autour d'une charnière (34, 134, 234, 334, 434) qui la relie au reste dudit pied (21, 121, 221), chaque dite console (33, 133, 233) d'une dite patte (31, 131, 231, 331, 431) respective s'étendant jusqu'à une extrémité libre (45, 145, 245), chaque patte (31, 131, 231, 331, 431) admettant une position escamotée et une position déployée dans laquelle son volet (32, 132, 232, 332, 432) a pivoté vers l'extérieur par rapport à ladite position escamotée, lesdites pattes (31, 131, 231, 331, 431) passant de ladite position escamotée à ladite position déployée lors de l'insertion dudit doigt (2, 102, 202, 302, 402) dans ledit corps (3, 103, 203, 303, 403), ladite extrémité libre (45, 145, 245) de chaque console (33, 133, 233) étant en butée contre ledit doigt (2, 102, 202, 302, 402) lorsqu'il est inséré dans ledit creux (27, 127, 227, 327, 427) dans ladite position de verrouillage, grâce à quoi chaque dite patte (31, 131, 231, 331, 431) est maintenue en position déployée, **caractérisée en ce que** chaque patte comporte un volet (32, 132, 232, 332, 432), chaque patte (31, 131, 231, 331, 431) admettant une position escamotée dans laquelle son volet (32, 132, 232, 332, 432) est en regard du volet (32, 132, 232, 332, 432) de l'autre dite patte (31, 131, 231, 331, 431) et sa console (33, 133, 233) est orientée vers sa charnière (34, 134, 234, 334, 434) et vers l'autre dite patte (31, 131, 231, 331, 431), sa console (33, 133, 233) étant superposée à la console (33, 133, 233) de l'autre dite patte (31, 131, 231, 331, 431) entre lesdits volets (32, 132, 232, 332, 432).

2. Attache selon la revendication 1, **caractérisée en ce que** lesdites consoles (33, 133, 233) sont situées de part et d'autre d'un plan médian (P) transversal auxdits volets (32, 132, 232, 332, 432).

3. Attache selon l'une quelconque des revendications 1 ou 2, **caractérisée en ce que** pour chaque dite patte (31, 131, 231, 331, 431), ladite extrémité libre (45, 145, 245) est située à proximité de la charnière (34, 134, 234, 334, 434) de l'autre dite patte (31, 131, 231, 331, 431) dans sa position escamotée.

4. Attache selon l'une quelconque des revendications 1 à 3, **caractérisée en ce qu'**à sa dite extrémité libre (45, 145, 245), chaque dite console (33, 133, 233) présente une surface d'appui (46, 146, 246) transversale à la direction axiale dudit creux (27, 127, 227, 327, 427) lorsque lesdites pattes (31, 131, 231, 331, 431) sont dans leur position escamotée, ledit doigt (2, 102, 202, 302, 402) venant appuyer sur ces dites surfaces (46, 146, 246) lors de son insertion dans ledit corps (3, 103, 203, 303, 403).

5. Attache selon l'une quelconque des revendications 1 à 4, **caractérisée en ce que** sur chaque dit volet (32, 132, 232, 332, 432), la surface opposée (40) à la surface (41) à partir de laquelle s'étend ladite console (33, 133, 233) est convexe et bombée.

6. Attache selon l'une quelconque des revendications 1 à 5, **caractérisée en ce que** ledit doigt (2) présente deux épaulements (10) longitudinaux situés sur deux surfaces opposées et adaptés à guider en translation lesdites extrémités libres (45) lors de l'insertion dudit doigt (2) dans ledit corps (3).

7. Attache selon l'une quelconque des revendications 1 à 6, **caractérisée en ce que** ledit pied (121) comporte des moyens de retenue desdites pattes (131) en position escamotée.

8. Attache selon la revendication 7, **caractérisée en ce que** lesdits moyens de retenue comportent deux platines (136) en vis-à-vis situées sur le pourtour dudit creux (127), chaque dite platine (136) étant située transversalement et entre les deux dites pattes (131) en position escamotée.

9. Attache selon la revendication 8, **caractérisée en ce que** lesdits moyens de retenue comportent en outre une dent (160) sur chaque dite console (133) et un décrochement (138) sur chaque dite platine (136) grâce à quoi chaque dite console (133) est adaptée à s'encliqueter sur une dite platine (136) respective.

10. Attache selon l'une quelconque des revendications 7 à 9, **caractérisée en ce que** ses dites pattes (131) sont en position déployée, en l'absence de sollicitation.

11. Attache selon l'une quelconque des revendications 1 à 10, **caractérisée en ce que** ledit doigt (2, 102, 202, 302, 402) est en matière plastique.

12. Attache selon l'une quelconque des revendications 1 à 11, **caractérisée en ce que** ledit corps (3, 103) présente une tête (20, 120) comportant ladite collerette (35, 135) et une surface (26, 126) présentant une ouverture par laquelle débouche ledit creux (27, 127) et **en ce que**, lorsque ledit doigt (2, 102) est inséré dans ledit creux (27, 127), la surface (5, 105) à l'extrémité dudit doigt (2, 102) du côté de ladite tête (20, 120) affleure essentiellement au niveau de ladite surface (26, 126) de ladite tête (20, 120).

13. Attache selon l'une quelconque des revendications 1 à 12, **caractérisée en ce que** ledit pied (221, 321, 421) comporte une paroi annulaire (270, 370, 470) s'étendant à partir de ladite collerette (235, 335, 435) et délimitant ledit creux (227, 327, 427).

14. Attache selon la revendication 13, **caractérisée en ce qu'**elle comporte des moyens d'encliquetage dudit doigt (202, 302, 402) dans ledit corps, ces moyens d'encliquetage comportant un bourrelet (288, 388, 488) sur ledit doigt (202, 302, 402) et une portion tronconique (271, 371, 471) de ladite paroi annulaire (270, 370, 470), cette portion (271, 371, 471) étant déformable pour permettre le passage dudit bourrelet (288, 388, 488) lors de l'insertion dudit pied (202, 302, 402).

15. Attache selon l'une quelconque des revendications 13 ou 14, **caractérisée en ce que** chaque dite patte (231, 331, 431) comporte en outre un levier d'entraînement (276, 376, 476) de la position déployée à la position escamotée, ce levier (276, 376, 476) s'étendant dans une encoche (275, 375, 475) que présente ledit volet (232, 332, 432) et débouchant par une portion de ladite charnière (234, 334, 434), ledit levier (276, 376, 476) s'étendant dans le plan dudit volet (232, 332, 432),
transversalement à cette charnière (234, 334, 434) et au-delà de celle-ci.

16. Attache selon la revendication 15, **caractérisée en ce que** ledit doigt (202, 302, 402) comporte en vis-à-vis de chaque dite patte (231, 331, 431) un renfoncement (292, 392, 492) dont une paroi est adaptée à entraîner, lors du retrait dudit doigt (202, 302, 402), ledit levier (276, 376, 476) vers la position escamotée de ladite patte (231, 331, 431).

17. Attache selon l'une quelconque des revendications 13 à 16, **caractérisée en ce que** chaque dit volet (332, 432) est situé, dans ladite position escamotée, dans une fenêtre découpée dans ladite paroi annulaire (370, 470).

18. Attache selon l'une quelconque des revendications 13 à 17, **caractérisée en ce que** ledit doigt (302) comporte un plot (396) et ladite paroi annulaire (370) comporte une lumière (397) s'étendant selon la direction axiale dudit corps (303), cette lumière (397) et ce plot (396) étant adaptés à guider en translation ledit doigt (302) dans ledit corps (303).
